(19) Europäisches Patentamt
European Patent Office
Office européen des brevets

(11) Publication number: **0 224 209 B1**

(12) **EUROPEAN PATENT SPECIFICATION**

(45) Date of publication of patent specification: **17.03.93**

(51) Int. Cl.[5]: **C22B 3/00**, C22B 58/00, C22B 60/02, C22B 34/34, C22B 26/00, C22B 59/00, C22B 34/36, C22B 61/00

(21) Application number: **86116136.2**

(22) Date of filing: **21.11.86**

# (54) Process for recovery of rare metals.

(30) Priority: **21.11.85 JP 262287/85**
**17.09.86 JP 218756/86**

(43) Date of publication of application:
**03.06.87 Bulletin 87/23**

(45) Publication of the grant of the patent:
**17.03.93 Bulletin 93/11**

(84) Designated Contracting States:
**DE FR GB IT**

(56) References cited:
**EP-A- 0 038 764**
**EP-A- 0 113 454**
**EP-A- 0 148 158**
**EP-A- 0 204 217**
**EP-A- 0 249 520**
**US-A- 4 383 104**
**US-A- 4 414 183**

(73) Proprietor: **SUMITOMO CHEMICAL COMPANY, LIMITED**
**Kitahama 4-chome 5-33**
**Chuo-ku Osaka 541(JP)**

(72) Inventor: **Inoue, Yasuhiko**
**5-8, Hoshigoecho**
**Niihama-shi Ehime 792(JP)**
Inventor: **Matsuda, Masaaki**
**4-5, Hoshigoecho**
**Niihama-shi Ehime 792(JP)**
Inventor: **Akiyoshi, Yoshirou**
**20-1, Hoshigoecho**
**Niihama-shi Ehime 792(JP)**

(74) Representative: **Blumbach Weser Bergen Kramer Zwirner Hoffmann Patentanwälte**
**Radeckestrasse 43**
**W-8000 München 60 (DE)**

EP 0 224 209 B1

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

BACKGROUND OF THE INVENTION

The present invention relates to a process for recovery of rare metals with use of a chelate resin having a specific functional group and more particularly it relates to a process for recovery of rare metals which comprises contacting a strongly acidic solution containing rare metals with a chelate resin having a polymer main chain to which a functional group containing a phosphorus atom is attached.

Recently, demand for rare metals has increased as new raw materials for the electronics industry, atomic energy industry and chemical industry.

For production of these rare metals, there are processes which comprise subjecting an ore containing rare metals to a leaching treatment with a mineral acid and then separating and concentrating the rare metals thus leached out by precipitation method, solvent extraction method or ion exchange method, followed by electrolysis or direct reduction.

However, the precipitation method has the defect that since the precipitation is restricted by solubility, the objective substance cannot be precipitated in a fixed amount if the concentration of the objective substance is markedly low. The extraction method has problems to be solved such as dissolution of the solvent into water, and loss of extractants due to repeated uses thereof. According to the ion exchange method and the chelate resin method, it is possible to capture the metals to be recovered which are present at relatively a low concentration, dissolution of the organic solvent in water does not occur and besides loss of adsorbent is only deterioration of functional groups and the resin per se. Recovery of rare metals with ion exchange resin and chelate resin has been considered useful for these reasons and these methods have been applied to recovery of U and In (Cf. Japanese Patent Unexamined Publication (Kokai) Nos. 11231/85 and 71524/85).

Rare metals are difficultly adsorbed by the general ion exchange resins and chelate resins with increase in hydrogen ion concentration in the solution and are adsorbed very little at a pH of 2-1 (0.01-0.1N).

Aqueous mineral acid solutions (1-2N) are often used as eluents of metals from chelate resins (Cf. Sakaguchi and Ueno, "Metal Chelate [III]", pages 57-59 (1967) published from Nankodo; High Polymer Associate, "Functional High Polymer", pages 61-63 (1974) published from Kyoritsu Shuppan). Therefore, it is necessary to adjust the hydrogen ion concentration of the mineral acid solution to one at which the objective metals can be recovered, by treatment with an alkali. This results in complication of process and besides amount of alkali used for neutralization gives a great effect on the cost.

Under the circumstances, the inventors have made research in an attempt to develop a process for recovery of rare metals from a strongly acidic solution with a chelate resin which is free from the above defects and as a result it has been found that rare metals present at relatively a low concentration in a mineral acid of high hydrogen ion concentration can be recovered at a high recovery rate by using a chelate resin having a specific functional group as an adsorbent. Thus, the present invention has been accomplished.

EP-A-0038764 describes the recovery of U and other heavy metals from highly acidic solutions with the acid of phosphorous containing chelate compounds and mentions diphosphonic derivatives of formula (G) and resins having (G) as a functional group

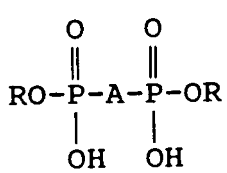 (G)

In the case of resins the symbol A is

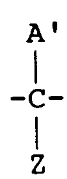

and this pendant group bonds to a polymer backbone at A', wherein the symbol Z is hydrocarbonyl, amino, an alcohol or hydrogen. Accordingly, even in the case where G carries an amino group, the amino group is attached to the carbon atom between two phosphonic groups. This is different from the present resins where a polymer backbone bonds to a phosphonic or phosphinic group through an aminoalkylene residue.

## SUMMARY OF THE INVENTION

In accordance with the present invention, there is provided a process for recovery of rare metals from a strongly acidic solution which comprises contacting a 0,5N - 8N aqueous mineral acid solution containing rare metal with a chelate resin having at least one functional group selected from an aminoalkylene phosphinic acid group, an aminoalkylene phosphinic acid ester group, an aminoalkylene phosphonic acid group, an aminoalkylene phosphonic acid ester group and metal salts of these acids.

The strongly acidic solution containing rare metals to be recovered by the present process has no specific limitation and the present process can be applied to any strongly acidic solutions, but is especially effective for such solutions containing rare metals as mineral acid leaching solutions of ores, ore slags, catalyst scraps, etc. Furthermore, kind of the mineral acids has no special limitation and the present process is effective for any of hydrochloric acid, sulfuric acid, nitric acid and phosphoric acid soltuions of at least 0.5 N in concentration. When the concentration exceeds 8 N, the resin is apt to deteriorate and moreover there is an economic problem in recovery of rare metals.

The rare metals to be recovered in accordance with the present invention are suitably gallium, uranium, molybdenum, rubidium, cesium, strontium, yttrium, niobium, tantalum, tungsten, ruthenium, osmium, rhodium, iridium, palladium, platinum, thallium and europium.

The chelate resins which are used in the present invention have a phosphinic or phosphonic group bonding to a polymer main chain through an amino group. These resins form a strong chelate bond with a rare metal. Examples of such resins include the following:

(a) Chelate resins having phosphinic acid ester group which are obtained by reacting a resin having amino group with a chloromethylphosphinic acid ester;

(b) Chelate resins having aminoalkylenephosphonic acid or aminoalkylenephosphinic acid ester group which are obtained by reacting a resin having primary or secondary amino group with a halogenated alkylphosphonic acid or a halogenated alkylphosphinic acid ester such as diethyl chloromethylphosphonate, ethyl chloromethylphosphonate, diphenyl chloromethylphosphonate, dicresyl chloromethylphosphonate, ethyl chloromethylphosphinate or the like or a mixture thereof;

(c) Chelate resins having aminoalkylenephosphonic acid group or aminoalkylenephosphinic acid group which are obtained by hydrolysis of the above chelate resins having aminoalkylenephosphonic acid ester group or aminoalkylenephosphinic acid ester group or by the same reaction as in the above (b) except that the phosphorous acid derivatives used are replaced by phosphorous acid; and

(d) Chelate resins having metal salts such as alkali metal salts, alkaline earth metal salts, etc., e.g. sodium salts, potassium salts and calcium salts

Chelate resins of the groups (b) and (c) are especially preferred.

Thus produced chelate resins may be contacted with the solution containing rare metals by any methods. There may be employed, for example, a method of passing a solution containing rare metals through a column in which the chelate resin is packed or a method of dipping the chelate resin in the solution containing rare metals and then carrying out filtration and separation.

Contacting temperature for the chelate resin and the solution containing rare metals has no special limitation, but usually this is carried out at 0-100 °C. Contacting time has also no special limitation.

The rare metals adsorbed by the chelate resin according to the present invention can be eluted and recovered by a suitable eluent.

As the eluent, aqueous solutions of a suitable concentration of bases such as sodium carbonate, sodium bicarbonate, sodium hydroxide, etc. are generally used, but when the bond between the chelate resin and the rare metal is strong, combination of an oxidizer and a mineral acid, that of a reducing agent and a mineral acid or that of a reducing agent and a base can be optionally used to perform elution and recovery.

Although it depends on kind and use of the rare metals, the solution which has eluted the rare metals (referred to as "eluate" hereinafter) is subjected to treatments such as neutralization, filtration, etc. to recover the metal as a metal hydroxide or the eluate per se is reduced with a reducing agent or electrolyzed to recover the metal.

The chelate resin from which the rare metals have thus been eluted is, as it is, reused as adsorbent for rare metals or if necessary, is treated with water and/or a basic aqueous solution such as sodium hydroxide, potassium hydroxide, calcium hydroxide, magnesium hydroxide, ammonia or the like, an acidic aqueous

solution of, for example, hydrochloric acid, sulfuric acid, nitric acid, phosphoric acid or the like and is then reused as the adsorbent.

According to the process of the present invention, it has become possible to directly capture and recover rare metals contained in solutions such as mineral acid solutions in which ores or metals containing rare metals are dissolved and thus the process does not require the alkali treatment for adjustment of pH of the mineral acid during recovery process resulting in simplification of the process. Further, the problem of consumption of alkali for pH adjustment has also been solved.

Moreover, metal adsorption speed of the chelate resins used in the present process is high and they can capture rare metals present at a relatively low concentration in strongly acidic solution. Accordingly, the industrial value of the present process is markedly high.

The following nonlimiting examples further illustrate the present invention.

Example 1 (Comparison)

10 ml of a resin (Chelate resin A) having phosphonic acid ester group obtained by reacting 200 parts by weight of chloromethylated polystyrene with 500 parts by weight of triethyl phosphite in toluene solvent was packed in a column of 12 mm $\phi$ in inner diameter. 100 ml of 2N aqueous sulfuric acid solution of 98.0 ppm in palladium concentration (palladium content 9.8 mg) was introduced into said packed column from the top thereof and passed therethrough over a period of 2 hours. According to analysis of the eluate on palladium, 8.8 mg of palladium had been adsorbed.

Examples 2-10

Chelate resin B: Duolite® ES-63 (Trade-mark for a resin having phosphonic acid group supplied by Diamond Shamrock Co.).

Chelate resin C: A resin having aminoalkylenephosphonic acid ester group obtained by reacting 60 parts by weight of polyacrylonitrile with 103 parts by weight of diethylenetriamine in an aqueous medium to obtain aminated polyacrylonitrile, which was further reacted with 281 parts by weight of aqueous formalin solution and 498 parts by weight of triethyl phosphite in the presence of 36 % hydrochloric acid.

Chelate resin D: A resin having quaternary phosphonium salt group obtained by reacting 200 parts by weight of chloromethylated polystyrene with 200 parts by weight of tributylphosphine in dimethylformamide solvent.

Chelate resin E: A resin having quaternary phosphonium salt group obtained by reacting 200 parts by weight of chloromethylated polystyrene with 260 parts by weight of triphenylphosphine in dimethylformamide solvent.

Chelate resin F: A resin having phosphine group obtained by reacting 150 parts by weight of brominated polystyrene with 64 parts by weight of a 1.6 mole % solution of n-butyl lithium in hexane in tetrahydrofuran solvent to obtain lithium polystyrene, which was then reacted with 300 parts by weight of chlorodiphenylphosphine in tetrahydrofuran solvent and further reacting the reaction product with 371 parts by weight of 40 % peracetic acid in methylene chloride solvent.

Chelate resin G: A resin having a sodium salt of phosphinic acid obtained by hydrolysis of Chelate resin D in 20 % aqueous sodium hydroxide solution.

Chelate resin H: A resin having phosphinic acid group obtained by reacting 100 parts by weight of polystyrene with 150 parts by weight of phosphorus trichloride in chloroform solvent and then hydrolyzing the reaction product.

Chelate resin I: A resin having phosphinic acid ester group obtained by reacting 100 parts by weight of aminated polystyrene with 120 parts by weight of cresyl chloromethylphosphinate in 1,2-dichloroethane solvent.

Chelate resin J: Sumichelate® MC-95 (Trade-mark for a resin having aminomethylenephosphonic acid group supplied by Sumitomo Chemical Co., Ltd.).

10 ml of each of the above chelate resins was packed in a column of 12 mm $\phi$ in inner diameter. 100 ml of 0.5 N aqueous hydrochloric acid solution of 98.0 ppm in ruthenium concentration (Ru) (ruthenium content 9.8 mg) was introduced in the packed column from the top thereof and passed therethrough over a period of 1 hour. Each eluate was analyzed on ruthenium to determine adsorption amount of ruthenium. The results are shown in Table 1.

Table 1

| Examples | Chelate resins | Adsorption of Ru (mg) |
|---|---|---|
| 2 Comparison | Chelate resin B | 9.2 |
| 3 Invention | " C | 9.7 |
| 4 Comparison | " D | 9.2 |
| 5 Comparison | " E | 9.0 |
| 6 Comparison | " F | 8.8 |
| 7 Comparison | " G | 8.9 |
| 8 Comparison | " H | 9.1 |
| 9 Invention | " I | 9.6 |
| 10 Invention | " J | 9.8 |

Comparative Examples 1-3

The procedure of Examples 2-10 was repeated except that Sumichelate® MC-30 (Trade-mark for a chelate resin having iminodiacetic acid group supplied by Sumitomo Chemical Co., Ltd.), Sumichelate® Q-10R (Trade-mark for a chelate resin having dithiocarbamic acid supplied by Sumitomo Chemical Co., Ltd.) and Dowex 50W (Trade-mark for a strongly acidic ion exchange resin supplied by Dow Chemical Co.). The results are shown in Table 2.

Table 2

| Comparative Example | Chelate resin | Adsorption of Ru (mg) |
|---|---|---|
| 1 | Sumichelate® MC-30 | 0.2 |
| 2 | Sumichelate® Q-10R | 3.1 |
| 3 | Dowex 50W | 1.1 |

Examples 11-28 and Comparative Examples 4-21

5 ml of the above Chelate resin J was contacted with 100 ml of mineral acid solutions containing the rare metals as shown in Table 3 over a period of 5 hours and concentrations of the rare metals before and after the contacting treatment were determined. The results are shown in Table 3.

The above was repeated using Sumichelate® MC-10 (Trade-mark for chelate resin having polyethylenepolyamino group supplied by Sumitomo Chemical Co., Ltd.) and concentrations of the rare metals were determined. The results are also shown in Table 3.

Table 3

| | | Chelate resin | Concentration of mineral acid | Metal | concentration before treatment (ppm) | Concentration after treatment (ppm) |
|---|---|---|---|---|---|---|
| Examples (continuation) | 11 | Chelate resin J | $4N-H_2SO_4$ | Rb | 103 | 9 |
| | 12 | | $30\%-H_3PO_4$ | Eu | 153 | 16 |
| | 13 | | $2N-H_2SO_4$ | W | 98 | 2 |
| | 14 | | $0.5N-HNO_3$ | Sr | 111 | 11 |
| | 15 | | 4N-HCl | Nb | 72 | 4 |
| | 16 | | $2N-H_2SO_4$ | Tl | 98 | 1 |
| | 17 | | $2N-H_2SO_4$ | Rh | 126 | 5 |
| | 18 | | $0.8N-H_2SO_4$ | Pd | 107 | 1 |
| | 19 | | 3N-HCl | Ir | 105 | 8 |
| | 20 | | $2N-H_2SO_4$ | Ru | 110 | 8 |
| | 21 | | $1N-HNO_3$ | Y | 68 | 2 |
| | 22 | | $2N-H_2SO_4$ | Cs | 95 | 10 |
| | 23 | | $4N-H_2SO_4$ | Ta | 102 | 8 |
| | 24 | | $2N-H_2SO_4$ | Os | 97 | 1 |
| | 25 | | $2N-H_2SO_4$ | Pt | 105 | 4 |
| | 26 | | $8N-H_2SO_4$ | Ga | 104 | 1 |
| | 27 | | $2N-H_3PO_4$ | U | 118 | 18 |
| | 28 | | 2N-HCl | Mo | 97 | 6 |
| Comparative Examples | 4 | Sumichelate® MC-10 | $4N-H_2SO_4$ | Rb | 103 | 103 |
| | 5 | | $30\%-H_3PO_4$ | Eu | 153 | 150 |
| | 6 | | $2N-H_2SO_4$ | W | 98 | 89 |
| | 7 | | $0.5N-HNO_3$ | Sr | 111 | 103 |
| | 8 | | 4N-HCl | Nb | 72 | 65 |
| | 9 | | $2N-H_2SO_4$ | Tl | 98 | 82 |
| | 10 | | $2N-H_2SO_4$ | Rh | 126 | 93 |
| | 11 | | $0.8N-H_2SO_4$ | Pd | 107 | 103 |
| | 12 | | 3N-HCl | Ir | 105 | 98 |
| | 13 | | $2N-H_2SO_4$ | Ru | 110 | 108 |
| | 14 | | $1N-HNO_3$ | Y | 68 | 66 |
| | 15 | | $2N-H_2SO_4$ | Cs | 95 | 89 |

Table 3 (continued)

| | | | | | | |
|---|---|---|---|---|---|---|
| Comparative Examples | 16 | | 4N-$H_2SO_4$ | Ta | 102 | 102 |
| | 17 | | 2N-$H_2SO_4$ | Os | 97 | 90 |
| | 18 | | 2N-$H_2SO_4$ | Pt | 105 | 105 |
| | 19 | | 8N-$H_2SO_4$ | Ga | 104 | 98 |
| | 20 | | 2N-$H_3PO_4$ | U | 118 | 117 |
| | 21 | | 2N-HCl | Mo | 97 | 97 |

## Claims

1. A process for the recovery of a rare metal which comprises contacting a 0,5-8N aqueous mineral acid solution containing at least one rare metal selected from the group consisting of gallium, uranium, molybdenum, rubidium, cesium, strontium, yttrium, niobium, tantalum, tungsten, ruthenium, osmium, rhodium, iridium, palladium, platinum, thallium and europium with a chelate resin having at least one functional group selected from an aminoalkylenephosphinic acid group, an aminoalkylenephosphinic acid ester group, an aminoalkylenephosphonic acid group, an aminoalkylenephosphonic acid ester group and metal salts of these acids, with the exclusion of aminoalkylene radicals located between two phosphonic acid groups.

## Patentansprüche

1. Verfahren zur Gewinnung eines seltenen Metalls, umfassend das Kontaktieren einer 0,5-8 n wäßrigen Mineralsäurelösung mit einem Gehalt an mindestens einem seltenen Metall, das aus der Gruppe Gallium, Uran, Molybdän, Rubidium, Cäsium, Strontium, Yttrium, Niob, Tantal, Wolfram, Ruthenium, Osmium, Rhodium, Iridium, Palladium, Platin, Thallium und Europium ausgewählt ist, mit einem Chelatharz mit mindestens einer funktionellen Gruppe, die aus einer Aminoalkylenphosphinsäuregruppe, einer Aminoalkylenphosphinsäureestergruppe, einer Aminoalkylenphosphonsäuregruppe, einer Aminoalkylenphosphonsäureestergruppe und Metallsalzen dieser Säuren ausgewählt ist, ausgenommen Aminoalkylenreste, die sich zwischen zwei Phosphonsäuregruppen befinden.

## Revendications

1. Procédé de récupération d'un métal rare, qui consiste à mettre une solution aqueuse d'acide minéral 0,5 à 8N contenant au moins un métal rare choisi parmi le gallium, l'uranium, le molybdène, le rubidium, le césium, le strontium, l'yttryum, le niobium, le tantale, le tungstène, le ruthénium, l'osmium, le rhodium, l'iridium, le palladium, le platine, le thallium et l'europium en contact avec une résine chélatée ayant au moins un groupe fonctionnel choisi parmi un groupe acide aminoalcoylènephosphinique, un groupe ester d'acide aminoalcoylènephosphinique, un groupe acide aminoalcoylènephosphonique, un groupe ester d'acide aminoalcoylènephosphonique et les sels métalliques de ces acides, à l'exclusion de radicaux aminoalcoylène interposés entre deux groupes acide phosphinique.